(19) Europäisches Patentamt
European Patent Office
Office européen des brevets

(11) **EP 0 637 013 B1**

(12) **EUROPÄISCHE PATENTSCHRIFT**

(45) Veröffentlichungstag und Bekanntmachung des Hinweises auf die Patenterteilung:
**11.11.1998 Patentblatt 1998/46**

(51) Int Cl.⁶: **G10L 5/06**, G10L 7/04, G10L 7/08, G10L 9/06

(21) Anmeldenummer: **94110378.0**

(22) Anmeldetag: **04.07.1994**

(54) **Verfahren und Anordnung zur Ausgabe von digitalen Sprachsignalen**

Process and apparatus for outputting of digital-speech-signals

Procédé et arrangement pour la sortie des signaux vocaux numériques

(84) Benannte Vertragsstaaten:
**AT BE CH DE FR GB IT LI NL SE**

(30) Priorität: **28.07.1993 DE 4325354**

(43) Veröffentlichungstag der Anmeldung:
**01.02.1995 Patentblatt 1995/05**

(73) Patentinhaber: **SIEMENS AKTIENGESELLSCHAFT
80333 München (DE)**

(72) Erfinder: **Clüver, Kai Dipl.-Ing.
D-12101 Berlin (DE)**

(56) Entgegenhaltungen:
**EP-A- 0 124 411          EP-A- 0 290 190
DE-A- 3 305 045**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren und eine Anordnung zur Ausgabe von digitalen Sprachsignalen nach der Übertragung der Signale in einem Kommunikationsnetz gemäß dem Asynchronen Transfermodus nach dem Oberbegriff des Patentanspruches 1 bzw. des Patentanspruches 7.

Die Übertragung digitaler Signale in Kommunikationsnetzen, beispielsweise diensteintegrierenden Netzen wie dem Breitband-ISDN (Integrated Services Digital Network), erfolgt zunehmend nach dem Prinzip des Asynchronen Transfermodus (ATM). Dabei sind die Digitalsignale jeglicher Art in Nachrichtenpaketen (Zellen) gleicher Länge enthalten. Der wesentliche Vorteil besteht darin, daß einheitliche Vermittlungs- und Übertragungseinrichtungen im Netz eingesetzt werden können.

Für den Fall, daß digitale Sprachsignale abgetastet und die codierten Abtastwerte in Nachrichtenpaketen gleicher Länge übertragen werden, ergeben sich daraus hauptsächlich zwei Probleme. Zum einen bedingt die beim Asynchronen Transfermodus erforderliche Assemblierung der Nachrichtenpakete (Paketierung) vor der Übertragung durch das Kommunikationsnetz im Codierer eine zusätzliche Signalverzögerung, zum anderen können nach der Übertragung durch das Kommunikationsnetz im Decodierer Verluste von Nachrichtenpaketen auftreten, die durch Störungen im Übertragungspfad, durch schwankende Laufzeiten, oder durch Überlastung der Vermittlung im Netz verursacht werden. Bei der Sprachkommunikation werden Verluste einzelner oder mehrerer Nachrichtenpakete vom Empfänger ignoriert und wahrgenommen.

Zur Minimierung der Wahrnehmbarkeit von Zellenverlusten gibt es ein Verfahren für eine decodierseitige Substitution der Sprachsignale nach einer ATM-Übertragung von PCM (Pulse Code Modulation)-codierten Sprachsignalen. Aus dem Aufsatz "Packet Interleaving for Reducing Speech Quality Degradation in Packet Voice Communications", by N. Matsuo et al, Proc. Globecom 1987, pages 45.4.1 - 45.4.5 ist eine Verschachtelung des codierten Sprachsignals in zwei oder mehr Nachrichtenpaketen bekannt, um beim Verlust eines Nachrichtenpakets eine grobe Rekonstruktion des beim Empfänger auszugebenden Sprachsignals zu ermöglichen. Eine Minderung der durch die paketierten Sprachsignale verursachten Qualitätseinbußen wird dadurch bewirkt, daß die vermißten Abtastwerte durch Mittelwerte von benachbarten Abtastwerten ersetzt werden.

Aus dem Aufsatz "The Effect of Waveform Substitution on the Quality of PCM Packet Communications", by O.J. Wasem et al, IEEE Transactions on Acoustics, Speech, and Signal Processing, Vol. 36, No. 3, March 1988, pages 342 - 348 ist ein Verfahren zur Substitution von PCM-codierten Sprachsignalen bei verlorengegangenen Nachrichtenpaketen nach einer ATM-Übertragung bekannt, bei dem ohne Verschachtelung das unmittelbar vor dem vermißten Nachrichtenpaket empfangene gültige Nachrichtenpaket für die Substitution verwendet wird. Die Substitution selbst erfolgt durch nochmalige Ausgabe desselben, bereits zuvor ausgegebenen Sprachsignals während des jeweils vermißten Nachrichtenpakets.

Beiden bekannten Verfahren ist gemeinsam, daß das Sprachsignal selbst die Grundlage für die Substitution des decodierseitig auszugebenden Sprachsignals bei Auftreten von Nachrichtenpaketverlusten nach der Übertragung gemäß dem Asynchronen Transfermodus bildet. Beim Verfahren mit Verschachtelung des Sprachsignals ist eine zusätzliche Signalverzögerung erforderlich, da das empfangene Signal vor der Ausgabe zwischengespeichert werden muß.

Es ist die Aufgabe der vorliegenden Erfindung, ein Verfahren und eine Anordnung der eingangs genannten Art zu schaffen, das bzw. die gewährleistet, daß durch auftretende Verluste von Nachrichtenpaketen bedingte und bei der Sprachkommunikation hörbare Störungen minimiert werden.

Diese Aufgabe wird hinsichtlich des Verfahrens durch die Merkmale des Patentanspruches 1 und hinsichtlich der Anordnung gemäß den Merkmalen des Patentanspruches 7 gelöst. Vorteilhafte Ausgestaltungen des erfindungsgemäßen Verfahrens bzw. der erfindungsgemäßen Anordnung sind in den Unteransprüchen angegeben.

Bei der Erfindung bildet nicht das Sprachsignal selbst die Grundlage der Substitution, sondern die Ausgabe eines substituierten Sprachsignals basiert auf einem Ersatzsignal, das durch grundfrequenzsynchrone Wiederholung eines beim zuletzt empfangenen Nachrichtenpaket erzeugten und als Anregungssignal dienenden Differenzsignals unter Beibehaltung der Filterkoeffizienten gewonnen wird. Das neue Anregungssignal durchläuft während des Verlusts eines Nachrichtenpakets ebenso das Ausgangsfilter. Es bedarf beim erfindungsgemäßen Substitutionsverfahren keiner Zwischenspeicherung des Sprachsignals vor der Ausgabe, so daß eine Signalverzögerung vermieden wird. Eine peroidische Wiederholung des alten Anregungssignals unter Aufrechterhaltung des zuvor eingestellten Adaptionszustandes des Ausgangsfilters ist dadurch möglich, daß das Sprachsignal während der Dauer eines Nachrichtenpakets als unveränderlich angenommen werden kann.

Durch ein derartiges Ausgabeverfahren wird die Substitution bei Verlusten von Nachrichtenpaketen auf der Basis eines Ersatzsignals durchgeführt, das ein weißes Spektrum aufweist. Die spektrale Färbung des auszugebenden substituierten Sprachsignals, d. h. die Einhüllende des zugehörigen Spektrums, wird nur vom Ausgangsfilter bestimmt und nicht durch die Erzeugung des Anregungssignals beeinflußt.

Von Vorteil ist es, bei Verlust eines Nachrichtenpakets das ausgegebene substituierte Sprachsignal auf den Eingang des Eingangsfilters rückzukoppeln, um beim Empfang eines darauffolgenden gültigen Nachrichtenpakets die Auswertung des eintreffenden Sprachsignals anhand aktualisierter Abtastwerte vornehmen zu können.

Von Vorteil ist es auch, wenn ein Wechsel des Anregungssignals für das Ausgangsfilter am Ende eines vermißten Nachrichtenpakets nicht durch einfaches Umschalten, sondern durch Überblendung (merging) der Signale erfolgt. Damit lassen sich durch das Umschalten bedingte Knackgeräusche während der Sprachkommunikation vermeiden.

Gemäß einer Weiterbildung der Erfindung hinsichtlich der Anordnung ist der Ausgang des Ausgangsfilters auf den Eingang des Eingangsfilters sowie auf den Eingang der für die Analyse des eintreffenden Sprachsignals vorgesehenen Einrichtung rückgekoppelt. Dadurch braucht der Betrieb des Eingangsfilters während der Dauer der Substitution bei einem vermißten Nachrichtenpaket nicht unterbrochen zu werden, um eine korrekte Anbindung des am Ende des vermißten Nachrichtenpakets einsetzenden Sprachsignals, das als gültiges Nachrichtenpaket empfangen wird, zu gewährleisten.

Von Vorteil ist es, wenn für die Analyseeinrichtungen jeweils ein Zustandsspeicher zur Aufnahme der zum Sprachsignal bzw. zum Anregungssignal gehörigen Abtastwerte vorgesehen ist, um aktualisierte Werte sowohl bei Empfang als auch bei Verlust eines Nachrichtenpakets zu haben.

Ein Ausführungsbeispiel der Erfindung wird anhand von Figuren näher erläutert. Im einzelnen zeigen

Figur 1 ein Blockschaltbild eines ATM-Übertragungssystems,

Figur 2 ein Blockschaltbild der erfindungsgemäßen Anordnung für die Ausgabe von digitalen Sprachsignalen,

Figur 3 einen Verlauf der Gewichtsfunktionen für das Anregungssignal des Ausgangsfilters in der Anordnung gemäß Figur 2 bei Verlust eines einzelnen Nachrichtenpakets,

Figur 4 einen Verlauf der Gewichtsfunktionen gemäß Figur 3 für das Anregungssignal des Ausgangsfilters in der Anordnung gemäß Figur 2 bei Verlust mehrerer aufeinanderfolgender Nachrichtenpakete,

Figur 5 die Struktur eines im Eingangsfilter und im Ausgangsfilter verwendeten Prädiktors,

Figur 6 und Figur 7 die Strukturen des Eingangsfilters und des Ausgangsfilters.

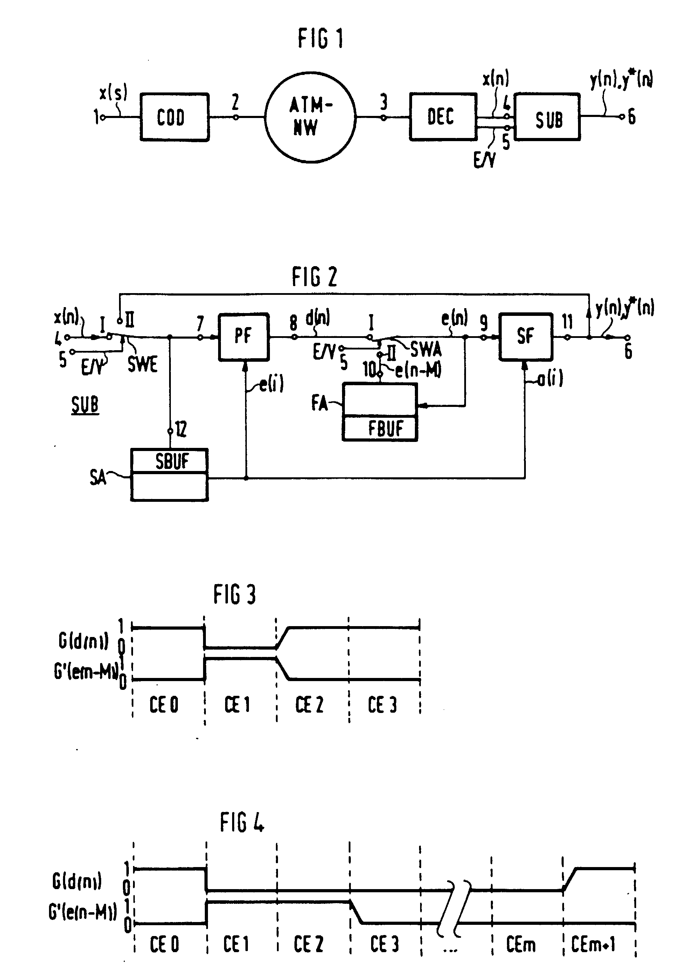

Figur 1 zeigt die grundsätzliche Struktur eines Übertragungssystems für eine ATM-Übertragung von digitalen Signalen nach CCITT-Empfehlung "ATM Adaption Layer (AAL) Specification", I.363, Typ 1. Dabei handelt es sich um die Übertragung von digitalen Signalen aller Art in diensteintegrierenden Netzen, wie z.B. dem Breitband-ISDN (Integrated Services Digital Network) mit Nachrichtenpaketen bzw. Zellen gleicher Länge. Das Übertragungssystem weist an seinem Eingang 1 eine Codiereinrichtung COD zur Abtastung von einlaufenden analogen Sprachsignalen x(s) mit einer Frequenz von 8 kHz, zur Codierung der Abtastwerte entsprechend einer 8-Bit-Pulscodemodulation (PCM), und zur Zwischenspeicherung von jeweils 47 codierten Abtastwerten in Form der Pulscodeworte zur Bildung eines Nachrichtenpakets bzw. einer ATM-Zelle. Des weiteren sorgt die Codiereinrichtung COD für die zur Anpassung an ein angeschaltetes Kommunikationsnetz ATM-NW erforderlichen Verarbeitungsschritte, wie z.B. die Erzeugung von Sequenznummer und Paketkopf.

Das an den Ausgang 2 der Codiereinrichtung COD angeschaltete Kommunikationsnetz ATM-NW weist einheitliche Vermittlungs- und Übertragungseinrichtungen für eine Duplex-Übertragung von PCM-codierten Sprachsignalen gemäß dem Asynchronen Transfermodus auf. Am Ausgang 3 des Kommunikationsnetzes ATM-NW befindet sich eine Decodiereinrichtung DEC für den Empfang der Nachrichtenpakete und für die Decodierung der im jeweiligen Nachrichtenpaket enthaltenen 47 PCM-Codeworte. Von der Decodiereinrichtung DEC werden die eintreffenden Nachrichtenpakete dahingehend überprüft, ob jeweils ein gültiges Nachrichtenpaket empfangen wird oder ein Nachrichtenpaket verlorengegangen ist. Der Verlust von einem einzelnen Nachrichtenpaket oder mehreren aufeinanderfolgenden Nachrichtenpaketen kann beispielsweise durch Störungen im jeweiligen Übertragungspfad oder durch schwankende Laufzeiten oder durch Überlastung der Vermittlung im Kommunikationsnetz ATM-NW verursacht werden.

An die Decodiereinrichtung DEC ist die erfindungsgemäße Anordnung SUB angeschaltet, von der in Abhängigkeit eines am Eingang 4 eintreffenden, aus den PCM-Codeworten rekonstruierten Sprachsignals x(n) am Ausgang ein Sprachsignal y(n) bei Empfang eines gültigen Nachrichtenpakets und ein substituiertes Sprachsignal y*(n) bei Verlust eines Nachrichtenpakets an ihrem Ausgang 6 ausgegeben wird. Ein von der Decodiereinrichtung DEC erzeugtes und der Anordnung SUB am Eingang 5 zugeführtes Steuersignal E/V zeigt den Empfang oder Verlust eines Nachrichtenpakets an. Durch die Anordnung SUB erhält man eine decodierseitige Substitution von verlorengegangenen Sprachsignalen, mit der die Wahrnehmbarkeit der Verluste bei der Sprachkommunikation ohne zusätzliche Signalverzögerungen bei der Ausgabe minimiert wird.

Die mit der Decodiereinrichtung DEC verbundene Anordnung SUB zur Ausgabe eines Sprachsignals y(n) bzw. eines substituierten Sprachsignals y*(n) zeigt Figur 2. Sie arbeitet nach dem Verfahren gemäß der Erfindung. Anhand der von der Decodiereinrichtung als Steuersignal E/V erhaltenen Prüfinformation, daß ein gültiges Nachrichtenpaket empfangen worden ist, nimmt ein erster Umschalter SWE am Eingang eines nachgeschalteten Eingangsfilters PF und ein zweiter Umschalter SWA am Eingang eines dem Eingangsfilter PF nachgeschalteten Ausgangsfilters SF jeweils eine Schalterstellung I ein.

Das aus den PCM-Codeworten rekonstruierte Sprachsignal x(n) wird zunächst einer an den Eingang 7 des Eingangsfilters PF angeschalteten ersten Analyseeinrichtung SA zur Berechnung von Filterkoeffizienten e(i) für das Eingangsfilter PF und von Filterkoeffizienten a(i) für das Ausgangsfilter SF zugeführt Es erfolgt eine vorausschauende LPC (Linear Predictive Coding of Speech)-Analyse zwölfter Ordnung nach einem Autokorrelationsverfahren über die letzten 120 Abtastwerte des zugeführten Sprachsignals x(n). Die erste Analyseeinrichtung SA weist einen Zwischenspeicher SBUF für die Aufnahme der Abtastwerte auf, die aus dem aktuell einlaufenden gültigen Nachrichtenpaket und einem Teil der beiden vorhergehenden Nachrichtenpakete stammen. Beispiele für LPC-Analysen sind in "Digital Processing of Speech Signals", by Rabiner et Schafer, Prentice Hall, Englewood Cliffs, NJ, USA, 1978, Kap. 8 angegeben.

Das anhand der Filterkoeffizienten e(i) eingestellte Eingangsfilter (PF) erzeugt aus dem eintreffenden Sprachsignal x(n) an seinem Ausgang 8 ein Differenzsignal d(n), das bei der Schalterstellung I des zweiten Umschalters SWA unmittelbar als Anregungssignal e(n) für das mit den Filterkoeffizienten a(i) eingestellte Ausgangsfilter SF dient. Das Differenzsignal d(n) gibt jeweils die Differenz zwischem einem Schätzwert und dem aktuellen Abtastwert an.

Das digitale Eingangsfilter PF und das digitale Ausgangsfilter SF sind adaptive Filter, die jeweils vor der Ausgabe des Sprachsignals y(n) aktualisiert werden. Sie besitzen zueinander inverse Übertragungsfunktionen, so daß bei Empfang eines gültigen Nachrichtenpakets das am Ausgang 6 der Anordnung SUB ausgegebene Sprachsignal y(n) mit dem von der Decodiereinrichtung eintreffenden Sprachsignal x(n) am Eingang 4 der Anordnung SUB übereinstimmt und damit die empfangene Codewortfolge eingehalten wird. Das Eingangsfilter PF ist ein üblicherweise bei der Sprachcodierung verwendetes Prädiktionsfehlerfilter, das durch lineare Prädiktion aus dem eintreffenden Sprachsignal x(n) das Differenzsignal d(n) bildet Das Ausgangsfilter SF ist ein üblicherweise bei der Sprachcodierung verwendetes Synthesefilter. Beide digitalen Filter weisen einen Zustandsspeicher auf.

Zusätzlich zur vorausschauenden LPC-Analyse des Sprachsignals x(n) durch die erste Analyseeinrichtung SA wird bei jedem empfangenen gültigen Nachrichtenpaket eine Periode M in Abtastwerten der Sprachgrundfrequenz durch eine zweite Analyseeinrichtung FA ermittelt. Bei der Schalterstellung I des zweiten Umschalters SWA ist die zweite Analyseeinrichtung FA sowohl mit dem Ausgang 8 des Eingangsfilters PF, als auch mit dem Eingang 9 des Ausgangsfilters SF gekoppelt. Bei der Analyse wird das Signal zunächst durch einen Tiefpaß vierter Ordnung mit einer Durchlaßgrenzfrequenz von 800 Hz gefiltert, und eine Autokorrelationsfunktion wird aus den letzten 200 Abtastwerten des gefilterten Signals berechnet. Der Index des Maximums der berechneten Autokorrelationsfunktion im Bereich von 20...140 Abtastwerten liefert die Periode M. Die zweite Analyseeinrichtung FA weist einen Zwischenspeicher FBUF zur Aufnahme der für die Analyse benötigten Abtastwerte auf. Beispiele für die Ermittlung der Sprachgrundfrequenz sind in "Digital Processing of Speech Signals", by Rabiner et Schafer, Prentice Hall, Englewood Cliffs, NJ, USA, 1978, Kap. 4 angegeben.

Tritt während der Übertragung der PCM-codierten Sprachsignale ein Verlust eines oder mehrerer aufeinanderfolgender Nachrichtenpakete auf, was durch die Decodiereinrichtung gemeldet wird, so wird von der Anordnung SUB ein substituiertes Sprachsignal y*(n) an Stelle des Sprachsignals y(n) bei einem empfangenen gültigen Nachrichtenpaket am Ausgang 6 ausgegeben. Dabei befinden sich der erste Umschalter SWE und der zweite Umschalter SWA in einer Schalterstellung II. In dieser Schalterstellung II sind der Ausgang 10 der zweiten Analyseeinrichtung FA über den zweiten Umschalter SWA an den Eingang 9 des Ausgangsfilters SF angeschlossen, sowie der Ausgang 11 des Ausgangsfilters SF an den Eingang 7 des Eingangsfilters PF und an den Eingang 12 der Analyseeinrichtung SA für die LPC-Analyse rückgekoppelt. Damit lassen sich der Zwischenspeicher SBUF der erstenAnalyseeinrichtung SA und der Zustandsspeicher des Eingangsfilters PF aktualisieren, ohne daß das Eingangsfilter PF beim Übergang von einem vermißten Nachrichtenpaket zum nächsten empfangenen gültigen Nachrichtenpaket in seinem Betrieb unterbrochen zu werden braucht

Während der Substitution wird weder eine Analyse des Anregungssignals e(n) durch die zweite Analyseeinrichtung FA durchgeführt, noch eine LPC-Analyse des Sprachsignals von der ersten Analyseeinrichtung SA vorgenommen, sondern stattdessen die beim zuletzt empfangenen Nachrichtenpaket berechneten Filterkoeffizienten a(i) für das Ausgangsfilter (SF) beibehalten. Das Anregungssignal e(n), mit dem das Ausgangsfilter SF beaufschlagt wird, besteht aus einem Ersatzsignal e(n-M), das durch grundfrequenzsynchrone Wiederholung des zuletzt vom Eingangsfilter PF erzeugten, mit dem Differenzsignal d(n) identischen Anregungssignal e(n) bereitgestellt wird. Dies ist möglich, da das Sprachsignal während der Dauer eines Nachrichtenpakets als unveränderlich angenommen werden kann.

Die Ausgabe des substituierten Sprachsignals y*(n) durch das Ausgangsfilter SF basiert folglich nicht auf dem zuvor empfangenen Sprachsignal, sondern vielmehr auf dem Ersatzsignal e(n-M), das ein weißes Spektrum aufweist. Damit läßt sich die Färbung der verschiedenen bei der Sprachkommunikation auftretenden Laute von der Erzeugung des Anregungssignals für die Ausgabe des substituierten Sprachsignals y*(n) trennen. Verfälschungen, die durch die Erzeugung des Anregungssignals auf der Grundlage des bereits zuvor ausgegebenen Sprachsignals entstehen, können vermieden werden.

Darüber hinaus bewirkt das als Synthesefilter ausgebildete Ausgangsfilter SF bereits eine gewisse Glättung der Umschaltvorgänge zwischen der Ausgabe des Sprachsignals y(n) bei Empfang eines gültigen Nachrichtenpakets und der Ausgabe des substituierten Sprachsignals y*(n) bei Verlust eines oder mehrerer Nachrichtenpakete. Bei bündelförmigen Verlusten mehrerer aufeinanderfolgender Nachrichtenpakete, die zu hörbaren Störungen bei der Sprachkommunikation führen, werden nur die ersten beiden Nachrichtenpakete des Verlustbündels gemäß der Erfindung grundfrequenzsynchron substituiert.

Der Wechsel des Anregungssignals e(n) zwischen dem Ersatzsignal e(n-M) und dem Differenzsignal d(n) erfolgt zur Vermeidung von Knackgeräuschen bei der Sprachkommunikation vorteilhafterweise nicht durch einfaches Umschalten mit Hilfe des zweiten Umschalters SWA, sondern vielmehr durch Überblendung der beiden Signale jeweils am Ende eines vermißten Nachrichtenpakets. Zu diesem Zweck wird das vom Eingangsfilter gebildete und anschließend mit einem ersten Verstärkungs- oder Multiplikationsfaktor versehene Differenzsignal d(n) mit dem durch periodische Wiederholung des Anregungssignals gewonnenen und mit einem zweiten Verstärkungs- oder Multiplikationsfaktor beaufschlagten Ersatzsignal e(n-m) verknüpft.

Der Verlauf der dem Verstärkungs- oder Multiplikationsfaktor entsprechenden Gewichtsfunktionen G(d(n)) und G'(e(n-M)) für das Differenzsignal d(n) und das Ersatzsignal e(n-M) ist in Figur 3 dargestellt. Es wird angenommen, daß ein gültiges Nachrichtenpaket CE0 decodierseitig empfangen worden ist. Das am Eingang des Ausgangsfilters zur Ausgabe des Sprachsignals anliegende Anregungssignal weist ein Gewicht G=1 auf. Dies bedeutet, daß das Anregungssignal mit dem vom Eingangsfilter erzeugten Differenzsignal d(n) identisch ist, was einer Verstärkung des Signals mit einem Verstärkungs- oder Multiplikationsfaktor Eins gleichkommt. Da die beiden Umschalter in der Anordnung gemäß Figur 2 sich in der Schalterstellung I befinden, erhält das Ersatzsignal e(n-M) bei Empfang des gültigen Nachrichtenpakets CE0 das Gewicht G=0.

Im Falle des Wechsels vom empfangenen gültigen Nachrichtenpaket CE0 auf ein vermißtes Nachrichtenpaket CE1 erfolgt die Substitution gemäß der Erfindung. Dabei nehmen die beiden Umschalter gemäß Figur 2 die Schalterstellung II ein, so daß anstelle des zuvor vom Eingangsfilter generierten Differenzsignals d(n) das durch grundfrequenzsynchrone Wiederholung sich ergebende Ersatzsignal e(n-M) dem Ausgangsfilter als Anregungssignal zugeführt wird. Die für den Verlust des Nachrichtenpakets CE1 sich ergebenden Gewichtsfunktionen G und G' weisen einen gegenüber dem empfangenen Nachrichtenpaket CE0 inversen Verlauf auf. Beim sprunghaft verlaufenden Übergang auf das Ersatzsignal e(n-M), das am Anfang des ersten Paketverlustes in Phase mit dem vorhergehenden Anregungssignal e(n) ist, entstehen keine hörbaren Störungen. Somit genügt eine Umschaltung gemäß den beiden Schalterstellungen in Figur 2. Eine Überblendung der beiden Signale durch Änderung der Gewichtsfunktionen für das eine und das andere Signal ist nicht erforderlich.

Zu Beginn eines dritten Nachrichtenpakets CE2, das gültig empfangen wird, ergibt sich ein verändertes Anregungssignal. Über ein Intervall von beispielsweise acht Abtastwerten wird das zuvor gültige Anregungssignal, in diesem Fall das Ersatzsignal e(n-M) für das verlorengegangene Nachrichtenpaket CE1, fortgesetzt und dabei mit einem linear auf Null abfallenden Gewicht versehen. Entsprechend erhält das einsetzende Differenzsignal d(n) für das empfangene Nachrichtenpaket CE2 in demselben Intervall von acht Abtastwerten ein auf Eins linear ansteigendes Gewicht. Auf diese Weise läßt sich die Überblendung der beiden ineinander übergehenden Signale erzielen.

Der Verlauf der Gewichtsfunktionen G und G' für die Signale d(n) und e(n-M) beim Empfang eines weiteren gültigen Nachrichtenpakets CE3 entspricht dem Verlauf der Gewichtsfunktionen beim Empfang des Nachrichtenpakets CE0, d.h. mit einem Gewicht G=1 für das Differenzsignal d(n) und einem Gewicht G'=0 für das Ersatzsignal e(n-M).

Eine Überblendung der beiden Signale zur Vermeidung von Knackgeräuschen und damit von hörbaren Störungen bei der Sprachkommunikation erfolgt somit im Falle des Wechsels vom vermißten Nachrichtenpaket CE1 auf das empfangene gültige Nachrichtenpaket CE2 am Ende eines einzelnen Paketverlustes. Durch das erfindungsgemäße Substitutionsverfahren werden einzeln auftretende Verluste von Nachrichtenpaketen bei der Sprachkommunikation nicht mehr wahrgenommen.

Bei einem Bündelverlust, d.h. einem Verlust mehrerer aufeinanderfolgender Nachrichtenpakete im Anschluß an einen Empfang eines gültigen Nachrichtenpakets, verlaufen die Gewichtsfunktionen G und G' für das Differenzsignal d(n) und das Ersatzsignal e(n-M) wie in Figur 4 dargestellt. Dabei gehen nach einem Empfang des gültigen Nachrichtenpakets CE0 die darauffolgenden Nachrichtenpakete CE1, CE2, CE3... verloren. Nach dem zweiten vermißten Nachrichtenpaket CE2 fällt die Gewichtsfunktion G'(e(n-M)) wiederum über ein Intervall von beispielsweise acht Abtastwerten linear vom Gewicht G'=1 auf das Gewicht G'=0 ab, während die Gewichtsfunktion G(d(n)) auf dem Wert Null verbleibt. Die Gewichtsfunktion G' verbleibt trotz weiterer vermißter Nachrichtenpakete CE3... beim Wert G'=0.

Sobald ein Nachrichtenpaket CEm+1 im Anschluß an ein vermißtes Nachrichtenpaket CEm wieder gültig empfangen wird, erhält das Anregungssignal e(n) in Form des Differenzsignals d(n) entsprechend dem Verlauf in Figur 4 ein vom Wert G=0 auf den Wert G=1 ansteigendes Gewicht.

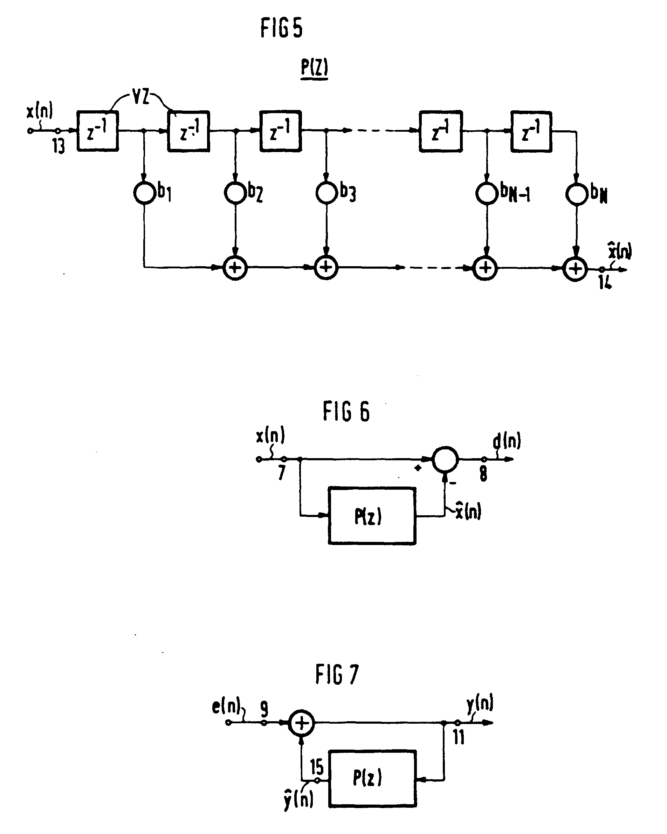

Figur 5 zeigt die Struktur eines Prädiktors P(z) zur Verwendung im Prädiktionsfehlerfilter und im Synthesefilter, die das digitale Eingangsfilter bzw. das digitale Ausgangsfilter in der Anordnung gemäß Figur 2 bilden. Die Struktur umfaßt eine aus N Verzögerungselementen VZ bestehende Verzögerungskette für die Verzögerung des am Eingang 13 eintreffenden Sprachsignals x(n) um jeweils einen Abtastwert. Das Verzögerungselement VZ realisiert dabei die Funktion $z^{-1}$ entsprechend der z-Transformierten. Das Ausgangssignal jedes Verzögerungselements VZ wird mit einem zugehörigen Prädiktorkoeffizienten $b_1...b_N$ multipliziert. Die Gesamtübertragungsfunktion des Prädiktors mit dem Schätzwert x(n) des Sprachsignals am Ausgang 14 ergibt sich durch aufeinanderfolgende Addition der aus den einzelnen Multiplikationen sich ergebenden Signale. Die Übertragungsfunktion für den Prädiktor genügt der Gleichung:

$$P(z) = \sum_{i=1}^{N} b_i \cdot z^{-i},$$

wobei N die Ordnung des Prädiktors kennzeichnet.

Die Strukturen des Prädiktionsfehlerfilters und des Synthesefilters unter Verwendung des Prädiktors P(z) sind in Figur 6 und Figur 7 dargestellt. Beim Prädiktionsfehlerfilter bildet das am Eingang 7 eintreffende Sprachsignal x(n) das Eingangssignal des Prädiktors P(z) gemäß Figur 5, der an seinem Ausgang 8 den Schätzwert x(n) liefert. Das Differenzsignal d(n) entsteht jeweils aus der Differenz des eintreffenden Sprachsignals x(n) und des Schätzwerts x(n). Das Prädiktionsfehlerfilter weist in der z-Transformierten die Übertragungsfunktion

B(z)=1-P(z)

auf.

Das Synthesefilter weist eine Struktur auf, bei der das zuletzt am Ausgang 11 ausgegebene Sprachsignal y(n) das Eingangssignal des Prädiktors P(z) gemäß Figur 5 bildet, der an seinem Ausgang 15 einen Schätzwert y(n) des Sprachsignals y(n) liefen Dieser Schätzwert y(n) wird zum Anregungssignal e(n) am Eingang 9 des Synthesefilters hinzuaddiert, so daß sich am Ausgang 11 das aktuelle Sprachsignal y(n) ergibt. Für das Synthesefilter gilt die Übertragungsfunktion

H(z) = 1/B(z).

## Patentansprüche

1. Verfahren zur Ausgabe von digitalen Sprachsignalen, die in einem Kommunikationsnetz gemäß dem Asynchronen Transfermodus in Nachrichtenpaketen gleicher Länge mit darin enthaltenen Abtastwerten übertragen und danach überprüft werden, ob jeweils ein gültiges Nachrichtenpaket empfangen oder ein Nachrichtenpaket vermißt wird, **dadurch gekennzeichnet**,

   - daß bei Empfang eines gültigen Nachrichtenpakets eine vorausschauende Analyse des eintreffenden Sprachsignals (x(n)) zur Berechnung von Filterkoeffizienten (e(i),a(i)) für ein digitales Eingangsfilter (PF) und für ein digitales Ausgangsfilter (SF) vorgenommen wird,
   - daß ein Differenzsignal (d(n)) aus dem eintreffenden Sprachsignal (x(n)) vom Eingangsfilter (PF) gebildet und als Anregungssignal (e(n)) dem Ausgangsfilter (SF) zugeführt wird,
   - daß das Ausgangsfilter (SF) mit einer zu dem Eingangsfilter (PF) inversen Übertragungsfunktionen das Sprachsignal (y(n)) an seinem Ausgang bildet und ausgibt,
   - daß eine Analyse des Anregungssignals (e(n)) zur Ermittlung einer Periode (M) der Sprachsignalgrundfrequenz vorgenommen wird und
   - daß bei Verlust eines Nachrichtenpakets ein Ersatzsignal (e(n-M)), das unter Beibehaltung der Filterkoeffizienten (a(i)) durch grundfrequenzsynchrone Wiederholung des Anregungssignals (e(n)) beim zuletzt empfangenen Nachrichtenpaket gebildet wird, als Anregungssignal (e(n)) dem Ausgangsfilter (SF) zugeführt wird, das ein substituiertes Sprachsignal (y*(n)) bildet und ausgibt.

2. Verfahren nach Anspruch 1, **dadurch gekennzeichnet**, daß bei Verlust eines Nachrichtenpakets das ausgegebene substituierte Sprachsignal (y*(n)) auf den Eingang des Eingangsfilters (PF) rückgekoppelt wird.

3. Verfahren nach Anspruch 1 oder 2, **dadurch gekennzeichnet**, daß ein Wechsel des Anregungssignals (e(n) zwischen dem Differenzsignal (d(n)) und dem Ersatzsignal (e(n-M)) durch Überblendung der Signale am Ende des vermißten Nachrichtenpakets erfolgt.

4. Verfahren nach einem der vorhergehenden Ansprüche, **dadurch gekennzeichnet**, daß die vorausschauende Analyse des eintreffenden Sprachsignals (x(n)) nach einem Autokorrelationsverfahren über die Abtastwerte der aktuell sowie zuvor empfangenen Nachrichtenpakete vorgenommen wird.

5. Verfahren nach einem der vorhergehenden Ansprüche,
**dadurch gekennzeichnet**,
daß bei Verlust mehrerer aufeinanderfolgender Nachrichtenpakete das subtituierte Sprachsignal (y*(n)) jeweils für die ersten beiden vermißten Nachrichtenpakete ausgegeben wird.

6. Verfahren nach einem der vorhergehenden Ansprüche,
**dadurch gekennzeichnet**,
daß für die Analyse des Anregungssignals (e(n)) eine Tiefpaßfilterung durchgeführt wird, und daß aus dem tiefpaßgefilterten Signal eine Autokorrelationsfunktion berechnet wird, aus der die Periode (M) der Sprachsignalgrundfrequenz ermittelt wird.

7. Anordnung (SUB) zur Ausgabe von digitalen Sprachsignalen, die in einem Kommunikationsnetz gemäß dem Asynchronen Transfermodus in Nachrichtenpaketen gleicher Länge mit darin enthaltenen Abtastwerten übertragen werden, unter Verwendung einer Decodiereinrichtung (DEC) zur Überprüfung, ob ein gültiges Nachrichtenpaket empfangen oder ein Nachrichtenpaket vermißt wird,
**dadurch gekennzeichnet**,

- daß an die Decodiereinrichtung (DEC) ein digitales Eingangsfilter (PF) zur Erzeugung eines Differenzsignals (d(n)) aus dem zugeführten Sprachsignal (x(n)), sowie an das Eingangsfilter (PF) ein digitales Ausgangsfilter (SF) zur Bildung eines Sprachsignals (y(n)) aus dem als Anregungssignal (e(n)) zugeführten Differenzsignal (d(n)) angeschaltet sind,
- daß an die Decodiereinrichtung (DEC) eine erste Analyseeinrichtung (SA) für eine vorausschauende Analyse des eintreffenden Sprachsignals (x(n)) zur Berechnung von Filterkoeffizienten (e(i),a(i)) für die zueinander inverse Übertragungsfunktionen aufweisenden Ein- und Ausgangsfilter (PF;SF) angeschaltet ist,
- daß an den Eingang des Ausgangsfilters (SF) eine zweite Analyseeinrichtung (FA) für eine Analyse des Anregungssignals (e(n)) zur Ermittlung einer Periode (M) der Sprachsignalgrundfrequenz bei Empfang eines gültigen Nachrichtenpakets angeschaltet ist, die bei Verlust eines Nachrichtenpakets ein durch grundfrequenzsynchrone Wiederholung des Anregungssignals (e(n)) gebildetes Ersatzsignal (e(n-M)) liefert und
- daß zwischen dem Eingangsfilter (PF) und dem Ausgangsfilter (SF) eine Umschalteinrichtung angeordnet ist, die bei Verlust eines Nachrichtenpakets das Ersatzsignal (e(n-M)) an Stelle des Differenzsignals (d(n)) als Anregungssignal (e(n)) auf das Ausgangsfilter (SF) zur Bildung und Ausgabe eines substituierten Sprachsignals (y*(n)) durchschaltet.

8. Anordnung nach Anspruch 7,
**dadurch gekennzeichnet**,
daß der Ausgang des Ausgangsfilters (SF) auf den Eingang des Eingangsfilters (PF) und auf den Eingang der ersten Analyseeinrichtung (SA) für die Analyse des eintreffenden Sprachsignals (x(n)) rückgekoppelt ist.

9. Anordnung nach Anspruch 8,
**dadurch gekennzeichnet**,
daß vor dem Eingang des Eingangsfilters (PF) und dem Eingang der ersten Analyseeinrichtung (SA) für die Analyse des eintreffenden Sprachsignals (x(n)) ein Umschalter (SWE) zur Durchschaltung des rückgekoppelten Signals bei Verlust eines Nachrichtenpakets oder des eintreffenden Sprachsignals (x(n)) bei Empfang eines gültigen Nachrichtenpakets angeordnet ist.

10. Anordnung nach einem der Ansprüche 7 bis 9,
**dadurch gekennzeichnet**,
daß die Umschalteinrichtung zwischen den beiden Filtern (PF,SF) aus einem weiteren Umschalter (SWA) besteht

11. Anordnung nach einem der vorhergehenden Ansprüche 7 bis 10,
**dadurch gekennzeichnet**,
daß die erste Analyseeinrichtung (SA) zur Analyse des eintreffenden Sprachsignals (x(n)) und die zweite Analyseeinrichtung (FA) zur Analyse des Anregungssignals (e(n)) jeweils einen Zwischenspeicher zur Aufnahme von zugehörigen Abtastwerten aufweisen.

**Claims**

1. Method for outputting digital voice signals which are transmitted in information packets of equal length, containing samples therein, according to the asynchronous transfer mode in a communications network and thereafter are checked whether in each case a valid information packet is received or an information packet is missed,
characterized in that

- on reception of a valid information packet, a predictive analysis of the incoming voice signal (x(n)) is carried out for calculating filter coefficients (e(i),a(i)) for a digital input filter (PF) and for a digital output filter (SF),

- a difference signal (d(n)) is formed from the incoming voice signal (x(n)) by the input filter (PF) and is supplied to the output filter (SF) as excitation signal (e(n)),

- the output filter (SF) forms and outputs at its output the voice signal (y(n)) with a transfer function which is inverse to the input filter (PF),

- an analysis of the excitation signal (e(n)) is carried out for determining one period (M) of the fundamental voice signal frequency and

- in a case of the loss of an information packet, an alternative signal (e(n-M)), which is formed by repeating the excitation signal (e(n)) synchronously with the fundamental frequency in the information packet received last, retaining the filter coefficients (a(i)), is supplied as excitation signal (e(n)) to the output filter (SF) which forms and outputs a substituted voice signal (y*(n)).

2. Method according to Claim 1, characterized in that in the case of the loss of an information packet, the output substituted voice signal (y*(n)) is set back to the input of the input filter (PF).

3. Method according to Claim 1 or 2, characterized in that a change of the excitation signal (e(n)) between the difference signal (d(n)) and the alternative signal (e(n-M)) takes place by merging the signals at the end of the missing information packet.

4. Method according to one of the preceding claims, characterized in that the predictive analysis of the incoming voice signal (x(n)) is carried out in accordance with an autocorrelation method over the samples of the information packets received currently and previously.

5. Method according to one of the preceding claims, characterized in that in the case of the loss of a number of successive information packets, the substituted voice signal (y*(n)) is in each case output for the first two missing information packets.

6. Method according to one of the preceding claims, characterized in that low-pass filtering is carried out for the analysis of the excitation signal (e(n)) and that from the low-pass-filtered signal, an autocorrelation function is calculated from which the period (M) of the fundamental voice signal frequency is determined.

7. Arrangement (SUB) for outputting digital voice signals which are transmitted in information packets of equal length, containing samples therein, in accordance with the asynchronous transfer mode in a communications network by using a decoding device (DEC) for checking whether a valid information packet is received or an information packet is missed,
characterized in that

- a digital input filter (PF) for generating a difference signal (d(n)) from the voice signal (x(n)) supplied is connected to the decoding device (DEC) and a digital output filter (SF) for forming a voice signal (y(n)) from the difference signal (d(n)) supplied as excitation signal (e(n)) is connected to the input filter (PF),

- a first analysing device (SA) for a predictive analysis of the incoming voice signal (x(n)) for calculating filter coefficients (e(i),a(i)) for the input and output filters (PF;SF) having mutually inverse transfer functions is connected to the decoding device (DEC),

- a second analysing device (FA) for analysing the excitation signal (e(n)) for determining one period (M) of the fundamental voice signal frequency on reception of a valid information packet, which second analysing device supplies an alternative signal (e(n-M)) formed by repetition of the excitation signal (e(n)) synchronously to the fundamental frequency in the case of the loss of an information packet, is connected to the input of the output filter (SF), and

- between the input filter (PF) and the output filter (SF), a switch-over device is arranged which, in the case of the loss of an information packet, switches the alternative signal (e(n-M)) to the output filter (SF) instead of the difference signal d(n)) as excitation signal (e(n)) for forming and outputting a substituted voice signal (y*(n)).

8. Arrangement according to Claim 7, characterized in that the output of the output filter (SF) is fed back to the input of the input filter (PF) and to the input of the first analysing device (SA) for analysing the incoming voice signal (x(n)).

9. Arrangement according to Claim 8, characterized in that in front of the input of the input filter (PF) and the input of the first analysing device (SA) for analysing the incoming voice signal (x(n)), a change-over switch (SWE) for switching through the signal fed back in the case of the loss of an information packet or the incoming voice signal (x(n)) on reception of a valid information packet is arranged.

10. Arrangement according to one of Claims 7 to 9, characterized in that the switch-over device between the two filters (PF, SF) consists of a further change-over switch (SWA).

11. Arrangement according to one of the preceding Claims 7 to 10, characterized in that the first analysing device (SA) for analysing the incoming voice signal (x(n)) and the second analysing device (FA) for analysing the excitation signal (e(n)) in each case exhibit a buffer memory for accommodating associated samples.

## Revendications

1. Procédé de sortie de signaux vocaux numériques, qui sont transmis dans un réseau de communication selon le mode de transfert asynchrone dans des paquets d'informations de même longueur avec des valeurs échantillonnées qui y sont contenues et qui sont testés pour savoir si un paquet d'informations correct est reçu ou si un paquet d'informations est manquant,

   caractérisé par le fait que

   - lors de la réception d'un paquet d'informations correct, on effectue une analyse prédictive du signal vocal entrant (x(n)) pour calculer des coefficients de filtre (e(i), a(i)) destinés à un filtre d'entrée numérique (PF) et à un filtre de sortie numérique (SF),
   - on forme un signal de différence (d(n)) à partir du signal vocal entrant (x(n)) au moyen du filtre d'entrée (PF) et on l'envoie comme signal d'excitation (e(n)) au filtre de sortie (SF),
   - le filtre de sortie (SF) ayant une fonction de transfert inverse de celle du filtre d'entrée (PF) forme le signal vocal (y(n)) à sa sortie et le délivre,
   - on effectue une analyse du signal d'excitation (e(n)) pour déterminer une période (M) de la fréquence fondamentale de la parole et
   - lors de la perte d'un paquet d'informations, on envoie un signal de remplacement (e(n-M)), qui est formé en conservant les coefficients de filtre (a(i)) par une répétition, synchrone à la fréquence fondamentale, du signal d'excitation (e(n)) lors du dernier paquet d'informations reçu, comme signal d'excitation (e(n)) au filtre de sortie (SF) qui forme un signal vocal substitué (y*(n)) et le délivre.

2. Procédé selon la revendication 1,

   caractérisé par le fait que,

   lors de la perte d'un paquet d'informations, on renvoie le signal vocal substitué sorti (y*(n)) à l'entrée du filtre d'entrée (PF).

3. Procédé selon la revendication 1 ou 2,

   caractérisé par le fait que

   une transition du signal d'excitation (e(n)) entre le signal de différence (d(n)) et le signal de remplacement (e(n-M)) s'effectue par une fusion des signaux à la fin du paquet d'informations manquant.

4. Procédé selon l'une des revendications précédentes,

   caractérisé par le fait que

   l'on effectue l'analyse prédictive du signal vocal entrant (x(n)) selon un procédé d'autocorrélation sur les valeurs échantillonnées du paquet d'informations reçu actuellement et des paquets d'informations reçus avant.

5. Procédé selon l'une des revendications précédentes,

   caractérisé par le fait que,

   lors de la perte de plusieurs paquets d'informations consécutifs, on délivre en sortie le signal vocal substitué (y*(n)) à chaque fois pour les deux premiers paquets d'informations manquants.

6. Procédé selon l'une des revendications précédentes,

   caractérisé par le fait que,

   pour l'analyse du signal d'excitation (e(n)), on met en oeuvre un filtre passe-bas et, à partir du signal filtré par ce filtre passe-bas, on calcule une fonction d'autocorrélation à partir de laquelle on détermine la période (M) de la fréquence fondamentale du signal vocal.

7. Dispositif (SUB) de sortie de signaux vocaux numériques qui sont transmis dans un réseau de communication selon le mode de transfert asynchrone dans des paquets d'informations de même longueur avec des valeurs échantillonnées qui y sont contenues, en utilisant un dispositif de décodage (DEC) destiné à tester si un paquet d'informations correct est reçu ou si un paquet d'informations est manquant,

   caractérisé par le fait que

   - un filtre d'entrée numérique (PF) destiné à produire un signal de différence (d(n)) à partir du signal vocal (x(n)) envoyé est raccordé au dispositif de décodage (DEC) et un filtre de sortie numérique (SF) destiné à former un signal vocal (y(n)) à partir du signal de différence (d(n)) envoyé comme signal d'excitation (e(n)) est raccordé au filtre d'entrée (PF),
   - un premier dispositif d'analyse (SA) destiné à une analyse prédictive du signal vocal entrant (x(n)) pour calculer des coefficients de filtre (e(i), a(i)) destinés aux filtres d'entrée et de sortie (PF ; SF) ayant des fonctions de transfert inverses l'une de l'autre est raccordé au dispositif de décodage (DEC),
   - un deuxième dispositif d'analyse (FA) destiné à une analyse du signal d'excitation (e(n)) pour déterminer une période (M) de la fréquence fondamentale du signal vocal lors de la réception d'un paquet d'informations correct est raccordé à l'entrée du filtre de sortie (SF) et fournit, lors de la perte d'un paquet d'informations, un signal de remplacement (e(n-M)) formé par une répétition, synchrone à la fréquence fondamentale, du signal d'excitation (e(n)), et

- un dispositif de commutation est placé entre le filtre d'entrée (PF) et le filtre de sortie (SF) et connecte, lors de la perte d'un paquet d'informations, le signal de remplacement (e(n-M)) à la place du signal de différence (d(n)) comme signal d'excitation (e(n)) sur le filtre de sortie (SF) pour former et délivrer en sortie un signal vocal substitué (y*(n)).

8. Dispositif selon la revendication 7,
   caractérisé par le fait que
   la sortie du filtre de sortie (SF) est renvoyée à l'entrée du filtre d'entrée (PF) et à l'entrée du premier dispositif d'analyse (SA) destiné à l'analyse du signal vocal entrant (x(n)).

9. Dispositif selon la revendication 8,
   caractérisé par le fait que,
   avant l'entrée du filtre d'entrée (PF) et avant l'entrée du premier dispositif d'analyse (SA) destiné à l'analyse du signal vocal entrant (x(n)), il est prévu un commutateur (SWE) destiné à connecter le signal renvoyé lors de la perte d'un paquet d'informations ou le signal vocal entrant (x(n)) lors de la réception d'un paquet d'informations correct.

10. Dispositif selon l'une des revendications 7 à 9,
    caractérisé par le fait que
    le dispositif de commutation entre les deux filtres (PF, SF) est constitué d'un autre commutateur (SWA).

11. Dispositif selon l'une des revendications précédentes 7 à 10,
    caractérisé par le fait que
    le premier dispositif d'analyse (SA) destiné à l'analyse du signal vocal entrant (x(n)) et le deuxième dispositif d'analyse (FA) destiné à l'analyse du signal d'excitation (e(n)) comportent chacun une mémoire temporaire pour enregistrer des valeurs échantillonnées associées.

## FIG 1

## FIG 2

SUB

## FIG 3

## FIG 4

## FIG 5

P(Z)

## FIG 6

## FIG 7